# EUROPÄISCHE PATENTANMELDUNG

(11) **EP 2 541 236 A1**
(43) Veröffentlichungstag der Anmeldung: **02.01.2013**
(21) Anmeldenummer: 12173990.8
(22) Anmeldetag: 28.06.2012
(51) Int. Cl.: G01N 21/952

(54) **Vorrichtung zur optischen Erfassung von Objekten**

(30) Priorität: 28.06.2011 AT 9382011
(71) Anmelder: Medek & Schoerner GmbH, 1142 Wien (AT)
(72) Erfinder: Descovich, Rudolf, 1090 Wien (AT); Lichtscheidl, Werner, 1190 Wien (AT)
(74) Vertreter: Grabherr, Claudia

(57) **Zusammenfassung**

Vorrichtung zur optischen Erfassung der Mantelfläche(1) von langgestreckten Objekten(2) wie beispielweise Kabeln, Seilen, Bändern, Stäben und dergleichen durch eine Bilderfassungseinrichtung(3), wobei umfangsseitig vom Objekt(2) abgestrahltes und/oder reflektiertes Licht durch Strahlengänge(4) einer Reflexionsoptik(5) in den Erfassungsbereich(6) der Bilderfassungseinrichtung(3) geleitet ist, wobei die Anzahl der Reflektionen pro Strahlengang in allen Strahlengängen(4) entweder eine gerade oder in allen Strahlengängen(4) eine ungerade Zahl ist und wobei die mittlere Länge aller Strahlengänge(4) im Wesentlichen gleich ist.

## Beschreibung

Die Erfindung betrifft eine Vorrichtung zur optischen Erfassung der Mantelfläche von langgestreckten Objekten wie beispielweise Kabeln, Seilen, Bändern, Stäben und dergleichen durch eine Bilderfassungseinrichtung, wobei umfangsseitig vom Objekt abgestrahltes und/oder reflektiertes Licht durch Strahlengänge einer Reflexionsoptik in den Erfassungsbereich der Bilderfassungseinrichtung geleitet ist.

Vorrichtungen zur optischen Erfassung der Mantelfläche von langgestreckten Objekten wie beispielsweise Kabeln, Seilen, Bändern, Stäben und dergleichen sind seit längerer Zeit bekannt und in unterschiedlichen Ausführungsformen publiziert.

Beispielsweise sind Vorrichtungen zur Überwachung von Kabelbedruckungen bekannt. Insbesondere zur Qualitätskontrolle ist es wichtig, dass Kabelbedruckungen kontinuierlich überwacht werden um mögliche Fehler frühzeitig zu erkennen. Zu diesem Zweck werden Vorrichtungen eingesetzt, die der Bedruckungsmaschine nachgeordnet sind und über eine optische Bilderfassungseinrichtung die Mantelfläche des Objektes, in diesem Fall des Kabels, überwachen. Da Kabel rundum entlang ihrer gesamten zylindrischen Mantelfläche bedruckt sein können ist es vonnöten, die gesamte Mantelfläche zu überwachen. Eine Möglichkeit der 360° Rundumüberwachung ist das Vorsehen mehrerer Bilderfassungseinrichtungen, die beispielsweise als Videoaufnahmegeräte, insbesondere Videokameras ausgeführt sein können. Ein Nachteil dieser Ausführung ist, dass die meist sehr dünnen Kabel nur jeweils einen kleinen Bereich des möglichen Bilderfassungsbereichs einer Kamera ausfüllen. Um mit ausreichender Qualität die gesamte Mantelfläche des Objekts überwachen zu können, sind zumindest drei, bevorzugt vier radial angeordnete Blickrichtungen notwendig. Für die Ausführung mit mehreren Kameras sind demnach drei bis vier Kameras notwendig, um die gesamte Mantelfläche oder einen Teilbereich der Mantelfläche zu überwachen.

Eine günstigere Lösung zur 360° Überwachung von langgestreckten Objekten mit nur einer einzigen Bilderfassungseinrichtung ist das Vorsehen einer Spiegeloptik. In diesem Fall wird die Vorderseite, also die der Kamera zugewandte Seite, direkt von der Bilderfassungseinrichtung aufgenommen. Die Rückseite, also die der Kamera abgewandte Seite, wird über Spiegel in den Sichtbereich der Kamera gespiegelt. Nachteilig an dieser Konfiguration ist, dass die aufgenommenen Abbilder in unterschiedlichen Spiegelorientierungen vorliegen. So ist die Vorderseite des Objektes ungespiegelt, und die Hinterseite des Objektes gespiegelt aufgenommen. Insbesondere bei der Verwendung von Schrifterkennungsalgorithmen, Mustererkennungsalgorithmen oder Fehlererkennungsalgorithmen ist diese Spiegelung mit einem Mehraufwand verbunden. Ein weiterer Nachteil ist, dass eine einzige Bilderfassungseinrichtung auch nur einen Entfernungsbereich hat, in dem das Objekt scharf aufgenommen werden kann. Da die umgelenkten Strahlengänge der Abbilder der Rückseite des Objekts einen weiteren Weg nehmen als die Strahlengänge der direkte Aufnahme der Vorderseite kommt es zu Problemen mit der Fokussierung der Bilder.

Aufgabe der vorliegenden Erfindung ist es nun, eine Vorrichtung zur optischen Erfassung der Mantelfläche von langgestreckten Objekten wie beispielsweise langgestreckten zylinderförmigen Objekten, Kabel, Seilen, Bändern, Stäben und dergleichen zu schaffen, die die Nachteile des Standes der Technik überwindet, dabei günstig in der Herstellung, einfach, zuverlässig und fehlerfrei in der Anwendung ist und darüber hinaus flexibel an unterschiedliche Einsatzbereiche wie beispielsweise Objektdurchmesser etc. anpassbar ist.

Die erfindungsgemäße Aufgabe wird dadurch gelöst, dass die Anzahl der Reflektionen pro Strahlengang in allen Strahlengängen entweder eine gerade oder in allen Strahlengängen eine ungerade Zahl ist und dass die mittlere Länge aller Strahlengänge im Wesentlichen gleich ist.

Weitere erfindungsgemäße Merkmale sind, dass die Reflexionsoptik Reflexionselemente umfasst, über die Abbilder von Teilen der Mantelfläche in den Erfassungsbereich der Bilderfassungseinrichtung geleitet sind, dass die Abbilder über Strahlengänge in den Erfassungsbereich der Bilderfassungseinrichtung geleitet sind, dass zumindest drei, bevorzugt vier Strahlengänge vorgesehen sind und/oder dass über die Abbilder der gesamte Umfang eines Teilbereichs der Mantelfläche des Objektes von der Bilderfassungseinrichtung erfasst ist.

Darüber hinaus zeichnet sich die Erfindung dadurch aus, dass die optische Erfassung der Mantelfläche kontinuierlich durch Relativbewegung des Objektes entlang seiner Längserstreckungsrichtung gegenüber der Reflexionsoptik erfolgt, dass die Reflexionsoptik Elemente wie beispielsweise Spiegel, optische Linsen, optische Filter, optische Prismen und/oder optische Pentaprismen umfasst, dass die Strahlengänge nebeneinander in den Erfassungsbereich der Bilderfassungseinrichtung geleitet sind, dass die Abbilder über Strahlengänge nebeneinander in den Erfassungsbereich der Bilderfassungseinrichtung geleitet sind und/oder dass von der Bilderfassungseinrichtung ein Bild aufgenommen ist, das nebeneinanderliegenden Abbildern des Objektes oder Teilbereichen der Mantelfläche des Objektes aus mehreren Blickwinkeln entspricht.

Weitere erfindungsgemäße Merkmale sind, dass die zur Bilderfassungseinrichtung reichenden Sehstrahlen im Wesentlichen den Strahlengängen folgen und dass die Sehstrahlen über die Reflexionsoptik jeweils auf einen Teilbereich der Mantelfläche des Objekts geleitet sind, dass die Sehstrahlen auf einen Teilbereich der Mantelfläche des Objekts gerichtet sind und in bevorzugter Weise gleichmäßig um die Haupterstreckungsachse des Objektes verteilt sind, dass eine Auswertungseinrichtung zur Auswertung der in den Erfassungsbereich der Bilderfassungseinrichtung geleiteten Abbilder des Objekts vorgesehen ist, dass die Abbilder als digitales Signal der Bilderfassungseinrichtung an die Auswertungseinrichtung geleitet sind ind/oder dass das digitale Signal durch Auswertungsalgorithmen wie beispielsweise Schrifterkennung, Fehlererkennung, Symbolerkennung und/oder Mustererkennung auswertbar ist.

Ferner ist es ein Teil der Erfindung, dass die mittlere Länge der Strahlengänge im Wesentlichen gleich der Objektweite der Bilderfassungseinrichtung ist, dass die Reflexionsoptik als Abbilder der Mantelfläche des Objektes kontinuierlich und in mehreren Strahlengängen in den Aufnahmebereich der Bilderfassungseinrichtung leitende Spiegeloptik und/oder Prismenoptik ausgeführt ist, dass im Erfassungsbereich der Bilderfiassungseinrichtung eine erster Strahlteiler und ein zweiter Strahlteiler vorgesehen sind, dass der zweite Strahlteiler weiter von der Bilderfassungseinrichtung entfernt ist als der erste Strahlteiler und/oder dass im der zweite Strahlteiler breiter ist als der erste Strahlteiler und diesen seitlich überragt.

Erfindungsgemäße Merkmale sind auch, dass die Abbilder der Mantelfläche konsekutiv nebeneinander in den Erfassungsbereich der Bilderfassungseinrichtung geleitet sind, dass zumindest eine Lichtquelle zur Beleuchtung der Mantelfläche des Objektes vorgesehen ist, dass die Lichtquelle steuerbar ist, dass die Beleuchtungsdauer der Lichtquelle, die Intensität der Lichtquelle und/oder die Blitzfrequenz der Lichtquelle variiert und/oder synchronisiert ist, dass die Beleuchtungsdauer der Lichtquelle, die Intensität der Lichtquelle, die Blitzfrequenz der Lichtquelle und/oder die Relativgeschwindigkeit des Objektes zur Bilderfassungseinrichtung miteinander synchronisiert sind und/oder dass die Lichtquelle als Dauerleuchtkörper oder als Blitzlicht-erzeugender Leuchtkörper wie beispielsweise LED-Blitz ausgeführt ist.

In weiterer Folge wird die Erfindung anhand konkreter Ausführungsbeispiele und Darstellungen näher beschrieben.
Fig. 1 zeigt eine schematische Darstellung einer möglichen Ausführungsform der erfindungsgemäßen Vorrichtung.
Fig. 2 zeigt eine weitere Ausführungsform der erfindungsgemäßen Vorrichtung in einer schematischen Darstellung.
Fig. 3 zeigt eine ähnliche Ausführung der Vorrichtung.

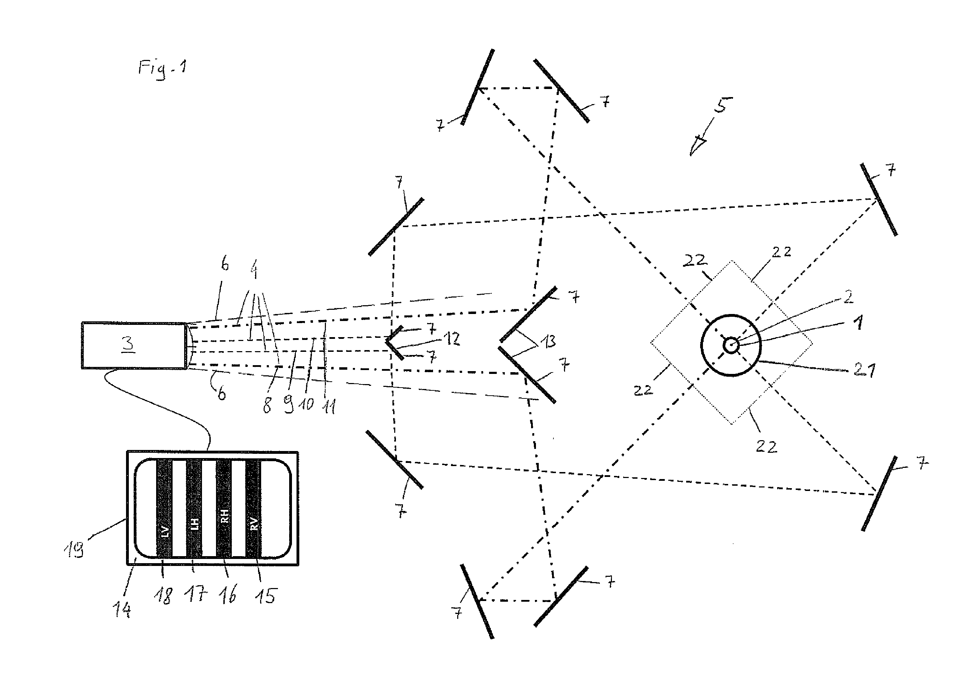

Fig. 1 zeigt eine schematische Darstellung einer erfindungsgemäßen Vorrichtung zur optischen Erfassung der Mantelfläche 1 eines Objektes 2 durch eine Bilderfassungseinrichtung 3. Die Haupterstreckungsrichtung des Objektes 2 verläuft in der vorliegenden Ansicht projizierend - d.h., dass die Haupterstreckungsachse des zylinderförmigen Objekts im Wesentlichen normal zur Darstellungsebene verläuft. Die Bilderfassungseinrichtung 3 hat einen Erfassungsbereich 6 in welchem eine Bilderfassung erfolgen kann. Der Erfassungsbereich 6 ist jener Bereich, der zwischen den beiden Linien liegt, die in den vorliegenden Darstellungen ebenfalls mit der Bezugsziffer 6 markierten sind. Im Wesentlichen entspricht der Erfassungsbereich dem Aufnahmebereich eines CCD-Chips, der in Abhängigkeit der Brennweite einer vorgeschalteten Linse oder auch der Aufnahmesensorgröße (z.B. 1/3", ½", 2/3", etc.) variierbar ist. Zur optischen Erfassung mehrerer Ansichten der Mantelfläche 1 des Objektes 2 ist eine Reflexionsoptik 5 vorgesehen. Diese umfasst in der vorliegenden Ausführungsform Reflexionselemente 7 über welche umfangseitig abgestrahltes und/oder reflektiertes Licht des Objektes 2 in den Erfassungsbereich 6 der Bilderfassungseinrichtung 3 geleitet wird. Durch die Reflexionselemente 7 der Reflexionsoptik 5 sind Strahlengänge definiert, entlang derer das Licht zur Bilderfassungseinrichtung 3 geleitet ist. Dabei ist anzumerken, dass die dargestellten Strahlengänge schematische Darstellungen sind.

Über die Reflexionsoptik 5 ist es möglich, auch Teile der Mantelfläche 1 des Objekts 2 in den Erfassungsbereich 6 der Bilderfassungseinrichtung 3 zu leiten, deren direkte Aufnahme nicht möglich wäre. Wie in Fig. 1 dargestellt, wird auch die Rückseite, also die der Bilderfassungseinrichtung 3 abgewandte Seite des Objektes 2 erfasst. Dazu werden die Sehstrahlen der Bilderfassungseinrichtung, die der Umkehrung des abgestrahlten Lichts des Objekts entsprechen, über Reflexionselemente 7 auf die Rückseite des Objektes 2 geleitet. In der vorliegenden Ausführung sind durch die Reflexionsoptik 5 vier Strahlengänge 4 ausgebildet. Der erste Strahlengang 8 ist über eine Seite des zweiten Strahlteilers 13 auf die, von der Bilderfassungseinrichtung aus betrachtet, rechte Vorderseite des Objektes gerichtet. Der zweite Strahlengang 9 ist über eine Seite des ersten Strahlteilers 12 und weitere Reflexionselemente 7 auf die rechte Hinterseite des Objekts geleitet. Der dritte Strahlengang ist über den ersten Strahlteiler 12 und weitere Reflexionselemente 7 auf die linke Hinterseite des Objektes 2 gerichtet und der vierte Strahlengang 11 ist über den zweiten Strahlteiler 13 und weitere Reflexionselemente auf die linke Vorderseite des Objektes gerichtet. In bevorzugter Weise treffen die Sehstrahlen bzw. die Strahlengänge gleichmäßig am Umfang verteilt auf die Mantelfläche 1 des Objektes 2. Darüber hinaus treffen die Strahlengänge 4 oder zumindest die mittleren Strahlen der Strahlengänge im Wesentlichen radial auf das Objekt 2 und sind gleichmäßig am Umfang verteilt, sodass die einzelnen Strahlengänge etwa 90°, bevorzugt exakt 90°, zueinander verdreht angeordnet sind. Durch diese Konfiguration werden vier unterschiedliche Abbilder der Mantelfläche 1 aus unterschiedlichen Richtungen in den Erfassungsbereich 6 der Bilderfassungseinrichtung 3 geleitet. Ferner treffen die Strahlengänge im Wesentlichen in einer Ebene auf das Objekt. Durch die Anordnung ist es möglich, dass durch eine einzige Bilderfassungseinrichtung 3 der gesamte Umfang eines Teilbereichs des Objektes 2 beobachtet werden kann. Schematisch dargestellt ist dies in Fig. 1 mit einer Bildanzeigeeinrichtung 14 dargestellt, welche nebeneinander die erste Ansicht 15, die zweite Ansicht 16, die dritte Ansicht 17 und die vierte Ansicht 18 anzeigt. Dabei entspricht die erste Ansicht 15 der Ansicht des ersten Strahlenganges 8, die zweite Ansicht 16 der Ansicht des zweiten Strahlenganges 9, die dritte Ansicht 17 der Ansicht des dritten Strahlenganges 10 und die vierte Ansicht 18 der Ansicht des vierten Strahlenganges 11. In bevorzugter Weise werden die einzelnen Abbilder, also die Ansichten 15, 16, 17, 18 konsekutiv, also aufeinanderfolgend in den Erfassungsbereich der Bildverarbeitungseinrichtung geleitet. Das heißt, dass die Abbilder einer gewünschten Reihenfolge nach von der Bildverarbeitungseinrichtung nebeneinander erfasst sind. In der vorliegenden Ausführung entspricht die gewünschte Reihenfolge der Abfolge der Abbilder in einer Drehrichtung um die Haupterstreckungsachse des Objektes. Beispielsweise ist dies die Abfolge der Abbilder von links nach rechts der Ansichten des Objektes von links vorne, gefolgt von einer Ansicht von links hinten, gefolgt von einer Ansicht von rechts hinten, gefolgt von einer Ansicht von rechts vorne. Durch zusammenführen der einzelnen Abbilder kann darüber hinaus eine Abwicklung der Mantelfläche dargestellt werden.

Herkömmliche Bilderfassungseinrichtungen sind mit einer Optik zur Fokussierung des aufzunehmenden Objektes ausgerüstet, wobei für den gesamten Erfassungsbereich etwa die selbe Objektweite bzw. der selbe Brennweitenbereich gilt. Um auch bei der Aufspaltung des Erfassungsbereichs 6 in mehrere Strahlengänge 4 alle Ansichten 15, 16, 17, 18 fokussiert aufnehmen und/oder darstellen zu können, ist es notwendig, dass die mittleren Längen aller Strahlengänge 8, 9, 10, 11 im Wesentlichen gleich sind und im Wesentlichen der Objektweite der Optik der Bilderfassungseinrichtungen entspricht, wobei grundsätzlich die Brennweite und die Objektweite entscheidende Faktoren für die Fokussierung sind. Um darüber hinaus alle Ansichten in derselben Spiegelorientierung, d.h. entweder normal oder spiegelbildlich darzustellen ist es darüber hinaus vonnöten, dass alle Strahlengänge entweder eine gerade Anzahl an Spiegelungen oder alle Strahlengänge eine ungerade Anzahl an Spiegelungen durchlaufen,

Das Vorliegen gleicher Spielgelorientierungen ist insbesondere wichtig, wenn spezielle Auswertungsalgorithmen wie beispielsweise Schrifterkennung, Mustererkennung, etc. eingesetzt werden. Dazu ist eine Auswertungseinrichtung 19 vorgesehen. Diese ist beispielsweise als Datenverarbeitungseinrichtung ausgeführt und umfasst Programmlogiken zur Analyse der aufgenommenen Bilder, insbesondere der Abbilder 15,16,17,18.

In der vorliegenden Konfiguration ist jeder Strahlengang drei Mal gespiegelt. Dadurch werden die Abbilder der Mantelfläche 1 grundsätzlich spiegelverkehrt von der Bilderfassungseinrichtung erfasst. Durch die Auswertungseinrichtung 19 kann in weiterer Folge das gesamte Bild über Datenverarbeitungsalgorithmen gespiegelt werden, sodass ungespiegelte Ansichten vorliegen. Diese Spiegelung des gesamten aufgenommenen Bildes ist jedoch nur dann sinnvoll, wenn alle Abbilder 15, 16, 17, 18 in spiegelverkehrter Orientierung vorliegen.

Durch die Begrenzung des Erfassungsbereichs der Bilderfassungseinrichtung in Richtung der Längserstreckung des Objektes 2 kann bei unbewegtem Objekt 2 jeweils nur ein Abschnitt der Mantelfläche durch die Bilderfassungseinrichtung aufgenommen werden. Insbesondere bei der Überwachung von langgestreckten Objekten wie beispielsweise Endlosprodukten, Kabeln, Bändern, Seilen, etc. muss somit zur Erfassung eines größeren Bereichs oder des gesamten Mantels das Objekt selbst bewegt werden. Beispielsweise bei Kabelbedruckungsmaschinen läuft das Objekt 2 mit einer im Wesentlichen konstanten Geschwindigkeit durch die Bedruckungsmaschine. Nachgeordnet befindet sich die erfindungsgemäße Vorrichtung durch die das Objekt ebenfalls mit im Wesentlichen konstanter Geschwindigkeit hindurchgeführt wird. Ist darüber hinaus die Bilderfassungseinrichtung als Videokamera oder als Kamera ausgeführt, die eine zeitliche Abfolge von Bildern aufnehmen kann, so ist eine kontinuierliche Erfassung von Teilbereichen der Mantelfläche gegeben. In bevorzugter Weise wird pro einzelnem Aufnahmebild ein zylinderförmiger Teilabschnitt des Mantels des Objektes aufgenommen. Durch Wahl der Bildaufnahmefrequenz oder auch durch die Wahl der Frequenz von externen Belichtungsquellen kann darüber hinaus durch einen Stroboskopeffekt ein stehendes, einfach zu analysierendes Bild erzeugt werden. So können zur Erzeugung des gewünschten Bildes die Aufnahmefrequenz, also die Anzahl der Bilder pro Zeiteinheit die die Bilderfassungseinrichtung aufnimmt; die Verschlusszeit, also die Aufnahmedauer der einzelnen Bilder; die Beleuchtungsdauer einer externen Lichtquelle; die Intensität einer externen Lichtquelle; das Blitzintervall und/oder die Blitzfrequenz einer externen Lichtquelle variiert und/oder synchronisiert sein. Synchronisiert werden beispielsweise die genannten Parameter miteinander und/oder die Parameter mit der Relativgeschwindigkeit zwischen dem Objekt und der Vorrichtung. Als externe Lichtquelle, zur Beleuchtung des aufzunehmenden Teilbereichs der Mantelfläche des Objektes bieten sich Dauerleuchtkörper, aber auch Blitzlicht-erzeugende Leuchtkörper wie beispielsweise LED-Blitze an. Diese sind derart angeordnet, dass sie zur Ausleuchtung des gewünschten Teilbereichs geeignet sind. Es können mehrere als auch eine einzige Lichtquelle vorgesehen sein. Das Licht der Lichtquellen kann dabei direkt, gefiltert, über Strahlengänge, über Reflexionselemente und/oder über die Strahlengänge der Reflexionsoptik auf das Objekt geleitet sein. Beispielsweise kann die Lichtquelle ringförmig, abschnittsweise oder punktuell im Bereich der Öffnung zur Durchführung des Objektes angeordnet sein. Ferner kann die Lichtquelle auch im Bereich der Bildaufnahmeeinrichtung vorgesehen sein, wobei in diesem Fall das Licht über die Strahlengänge zum Objekt geleitet ist. Zur Erzeugung eines qualitativ hochwertigen stehenden Bildes müssen insbesondere bei hohen Relativgeschwindigkeiten zwischen Objekt und Bilderfassungseinrichtung zur Vermeidung eines Verwischungseffektes die Belichtungszeiten gering gehalten werden. Die kurzen Belichtungszeiten fordern für ein ausreichend belichtetes Bild auch eine ausreichende Ausleuchtung. Je höher die Relativgeschwindigkeit, desto kürzer muss die Verschlusszeit sein und desto intensiver die Beleuchtung. Je niedriger die Produktionsgeschwindigkeit ist, desto länger kann der Verschluss der Kamera offen bleiben und die Lichtmenge muss nicht mehr so groß gewählt werden, da der CCD-Chip akkumulativ oder kumulativ arbeitet.

Es entspricht aber ebenfalls dem Erfindungsgedanken, die Analysealgorithmen auch auf bewegte Bilder anzuwenden.

Die Reflexionselemente sind in bevorzugter Weise als Spiegel ausgeführt. Sie können aber durch äquivalente Mittel ersetzt werden, die es ermöglichen die Richtung, den Verlauf und die Länge von Strahlengängen zu variieren. Beispiele für weitere Reflexionselemente sind Prismen, Pentaprismen, Lichtleiter etc. Darüber hinaus können zur Verbesserung der Qualität weitere optische Elemente wie beispielsweise Linsen, optische Elemente zur Lichtbrechung, Filter und dergleichen eingesetzt werden. Ferner kann zum Schutz der erfindungsgemäßen Vorrichtung, insbesondere gegen die Verschmutzung der Reflexionsoptik 5, ein oder mehrere Sichtfenster 22 vorgesehen sein. Das Objekt 2, das durch die Öffnung 21 in die Vorrichtung geführt ist, ist durch die Anordnung der Sichtfenster 22 von der Spiegeloptik räumlich getrennt. Die Sehstrahlen bzw. das Licht kann zwar die Sichtfenster 22 durchdringen, der Austausch von Luft, insbesondere aber Verunreinigungen wie Staub, Partikeln, Flüssigkeiten, Luftfeuchtigkeit etc. ist jedoch verhindert. In bevorzugter Weise umfasst die Vorrichtung einen abgeschlossenen Raum in dem die Reflexionsoptik 5 vorgesehen ist, und der gegenüber Umwelteinflüssen abgedichtet ist.

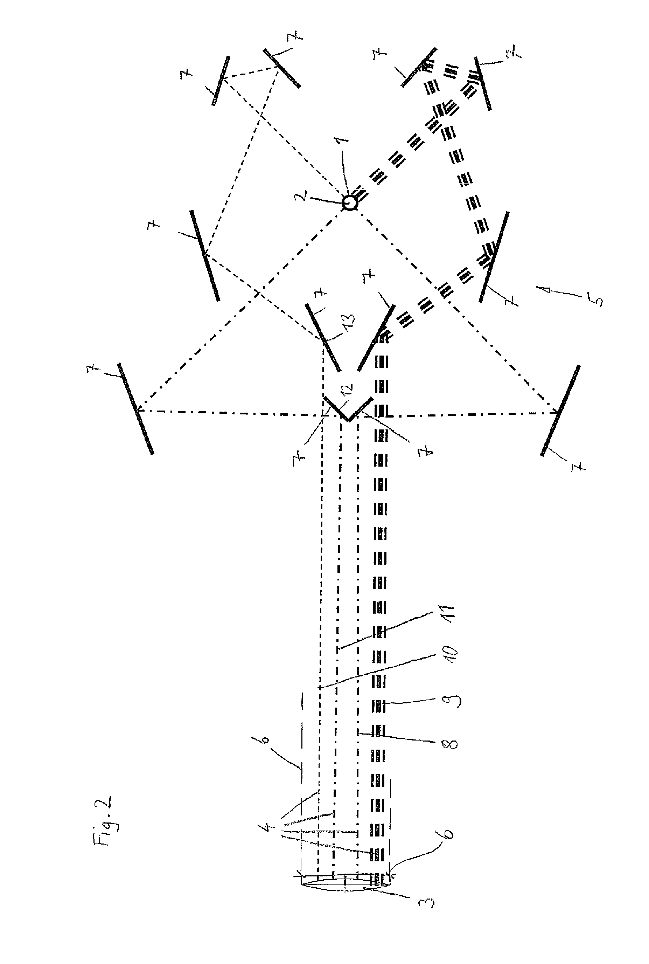

Fig. 2 zeigt eine weitere Möglichkeit der Konfiguration von Strahlengängen. Dabei sind wiederum vier Strahlengänge 4 über Reflexionselemente 7 auf die Mantelfläche 1 des Objekts 2 gerichtet. Wiederum umfasst die Reflexionsoptik 5 einen ersten Strahlteiler 12 und einen zweiten Strahlteiler 13, wobei die Strahlteiler 12, 13 im Wesentlichen im direkten Sichtbereich der Bilderfassungseinrichtung 3 angeordnet sind. Die vier Strahlengänge treffen auf vier unterschiedliche Abschnitte der Mantelfläche 1. Wie in Fig. 1 ist die erste Ansicht 15 durch den ersten Strahlengang 8, die zweite Ansicht 16 durch den zweiten Strahlengang 9, die dritte Ansicht 17 durch den dritten Strahlengang 10 und die vierte Ansicht 18 durch den vierten Strahlengang 11 in den Erfassungsbereich der Bilderfassungseinrichtung geleitet.

In der Konfiguration nach Fig. 2 sind im Unterschied zur Fig. 1 die Anzahlen der Spiegelungen pro Strahlengang nicht gleich. Der erste und der vierte Strahlengang sind jeweils zwei Mal gespiegelt. Der zweite und der dritte Strahlengang sind jeweils vier Mal gespiegelt. Da die Anzahl der Spiegelungen - also zwei und vier - jeweils gerade Zahlen sind, liegen wiederum alle Abbildungen in der gleichen Spiegelungsorientierung vor. Auch in der vorliegenden Konfiguration sind die mittleren Längen der einzelnen Strahlengänge 4 aller Strahlengänge im Wesentlichen gleich lang sodass alle Abbilder mit einer Fokussierungsoptik der Bilderfassungseinrichtung scharfgestellt werden können.

Der zweite Strahlengang 9 ist in Fig. 2 schematisch als breiteres Strahlenbündel dargestellt. Das Strahlenbündel, das in bevorzugter Weise breiter ist als der Durchmesser des Objektes 2, wird von den Reflexionselementen 7 der Reflexionsoptik 5 umgelenkt und verläuft von einem Teilbereich der Mantelfläche 1 zum Erfassungsbereich 6 der Bilderfassungseinrichtung 3. Durch das schräge Auftreffen des Strahlenbündels auf die Reflexionselemente können die Weglängen von zwei einzelnen Strahlen des Strahlenbündels voneinander abweichen. Über den gesamten Verlauf des Strahlenganges sind die Längenunterschiede einzelner Strahlen eines Strahlenbündels jedoch so gering, dass sie einem Objektweitenbereich entsprechen, der von der Bilderfassungseinrichtung 3 als ausreichend scharf aufgenommen werden kann.

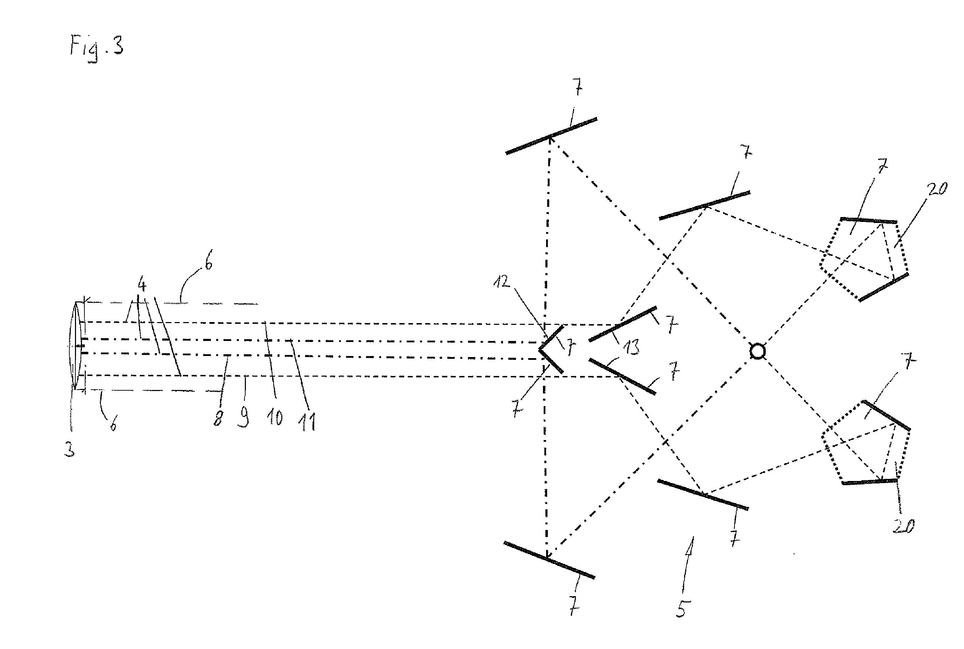

Fig. 3 zeigt eine ähnliche Konfiguration wie Fig. 2 mit vier Strahlengängen 4, insbesondere einem ersten Strahlengang 8, einem zweiten Strahlengang 9, einem dritten Strahlengang 10 und einem vierten Strahlengang 11. Im Verlauf des zweiten Strahlengangs 9 und des dritten Strahlengangs 10 sind statt, wie in Fig. 2 dargestellt, zwei Reflexionselementen jeweils ein Pentaprisma 20 vorgesehen.

Auch in dieser Ausführungsform ist abgestrahltes und/oder reflektiertes Licht der Mantelfläche 1 des Objekts 2 über Strahlengänge 4 in den Erfassungsbereich 6 der Bilderfassungseinrichtung 3 geleitet. Zur kontinuierlichen Erfassung größerer Teile der Mantelfläche ist das Objekt 2 entlang seiner Längserstreckungsrichtung, in der vorliegenden Darstellung also normal zur Bildebene, bewegbar angeordnet.

Alternativ zur feststehenden Vorrichtung mit einem bewegten Objekt kann die Vorrichtung selbst auch mobil eingesetzt werden, um stehende Objekte inspizieren zu können. Beispielsweise ist es bei bestehenden Objekten wie freihängenden Leitungen oder Tragseilen von Seilbahnen vonnöten regelmäßige Kontrollen durchzuführen. Zu diesem Zweck kann die erfindungsgemäße Vorrichtung entlang des Objektes insbesondere entlang der Haupterstreckungsrichtung des Objektes bewegt werden, um dabei die Mantelfläche zu erfassen.

An dieser Stelle sei angemerkt, dass sich die Erfindung nicht auf die angeführten Ausführungsbeispiele beschränkt. Weitere, dem Erfindungsgedanken entsprechende Ausführungen ergeben sich auch aus Kombinationen einzelner oder mehrerer Merkmale, die aus der gesamten Beschreibung, den Figuren und/oder den Ansprüchen zu entnehmen sind. Somit sind auch Ausführungen offenbart, die aus Kombinationen von Merkmalen bestehen, die aus unterschiedlichen Ausführungsbeispielen stammen. Die Figuren sind zumindest teilweise schematische Darstellungen, wobei die Dimensionen und Proportionen von weiteren, zeichnerisch nicht dargestellten, Ausführungsformen oder Merkmalen sowie von realen Ausführungen abweichen können.

Ferner sei angemerkt, dass die Strahlengänge der Figuren 1 bis 3 lediglich schematische Darstellungen der Strahlengänge sind. So sind erfindungsgemäß mehrere Abbilder in den Erfassungsbereich der Bilderfassungseinrichtung geleitet. Diese Abbilder entsprechen Bereichen oder Bündeln mehrerer Strahlen. Die Aufteilung der Bereiche im Erfassungsbereich ist maßgeblich durch die Anordnung der beiden Strahlteiler 12 und 13 gegeben. Darüber hinaus ist auch aufgrund der einfacheren Darstellung das Verhältnis der mittleren Längen der einzelnen Strahlengänge nicht zwingend der Realität entsprechend. Dem Erfindungsgedanken zufolge sind alle Strahlengänge 8, 9, 10, 11 im Wesentlichen gleich lang. Dies bedeutet, dass der mittlere Abstand von dem Maßgeblichen optischen Element der Bilderfassungseinrichtung zur Mantelfläche des Objekts - also der Objektweite - bei allen Strahlengängen im Wesentlichen gleich ist. Variationsmöglichkeiten der Längen sind dadurch gegeben, dass zur Scharfstellung der Abbilder ein gewisser Objektweitenbereich akzeptabel ist. Ferner kann über unterschiedlich gekrümmte Linsen ebenfalls eine Adaption an gewisse Längenschwankungen vorgenommen sein.
1. Mantelfläche
2. Objekt
3. Bilderfassungseinrichtung
4. Strahlengänge
5. Reflexionsoptik
6. Erfassungsbereich
7. Reflexionselemente
8. Erster Strahlengang
9. Zweiter Strahlengang
10. Dritter Strahlengang
11. Vierter Strahlengang
12. Erster Strahlteiler
13.Zweiter Strahlteiler
14.Bildanzeigeeinrichtung
15. erste Ansicht
16.Zweite Ansicht
17.Dritte Ansicht
18. Vierte Ansicht
19.Auswertungseinrichtung
20. Pentaprisma
21.Öffnung
22.Sichtfenster

## Patentansprüche

1. Vorrichtung zur optischen Erfassung der Mantelfläche(1) von langgestreckten Objekten(2) wie beispielweise Kabeln, Seilen, Bändern, Stäben und dergleichen durch eine Bilderfassungseinrichtung(3),
wobei umfangsseitig vom Objekt(2) abgestrahltes und/oder reflektiertes Licht durch Strahlengänge(4) einer Reflexionsoptik(5) in den Erfassungsbereich(6) der Bilderfassungseinrichtung(3) geleitet ist,
**dadurch gekennzeichnet, dass**
die Anzahl der Reflektionen pro Strahlengang in allen Strahlengängen(4) entweder eine gerade oder in allen Strahlengängen(4) eine ungerade Zahl ist und dass die mittlere Länge aller Strahlengänge(4) im Wesentlichen gleich ist.

2. Vorrichtung nach Anspruch 1, **dadurch gekennzeichnet, dass** die Reflexionsoptik(5) Reflexionselemente(7) umfasst, über die Abbilder von Teilen der Mantelfläche(1) in den Erfassungsbereich(6) der Bilderfassungseinrichtung(3) geleitet sind.

3. Vorrichtung nach Anspruch 1 oder 2, **dadurch gekennzeichnet, dass** die Abbilder über Strahlengänge(4) in den Erfassungsbereich(6) der Bilderfassungseinrichtung(3) geleitet sind, wobei zumindest drei, bevorzugt vier Strahlengänge(4) vorgesehen sind.

4. Vorrichtung einem der Ansprüche 2 bis 3, dass über die Abbilder der gesamte Umfang eines Teilbereichs der Mantelfläche(1) des Objektes(2) von der Bilderfassungseinrichtung(3) erfasst ist.

5. Vorrichtung nach einem der Ansprüche 1 bis 4, **dadurch gekennzeichnet, dass** die optische Erfassung der Mantelfläche(1) kontinuierlich durch Relativbewegung des Objektes(2) entlang seiner Längserstreckungsrichtung gegenüber der Reflexionsoptik(5) erfolgt.

6. Vorrichtung nach einem der Ansprüche 1 bis 5, **dadurch gekennzeichnet, dass** die Reflexionsoptik(5) Elemente wie beispielsweise Spiegel, optische Linsen, optische Filter, optische Prismen und/oder optische Pentaprismen umfasst.

7. Vorrichtung nach einem der Ansprüche 2 bis 6, **dadurch gekennzeichnet, dass** die Abbilder über Strahlengänge(4) nebeneinander in den Erfassungsbereich(6) der Bilderfassungseinrichtung(3) geleitet sind, dass von der Bilderfassungseinrichtung(3) ein Bild aufgenommen ist, das nebeneinanderliegenden Abbildern des Objektes(2) oder Teilbereichen der Mantelfläche(1) des Objektes(2) aus mehreren Blickwinkeln entspricht und/oder dass die Abbilder der Mantelfläche(1) konsekutiv nebeneinander in den Erfassungsbereich(6) der Bilderfassungseinrichtung(3) geleitet sind.

8. Vorrichtung nach einem der Ansprüche 1 bis 7, **dadurch gekennzeichnet, dass** die zur Bilderfassungseinrichtung(3) reichenden Sehstrahlen im Wesentlichen den Strahlengängen(4) folgen und dass die Sehstrahlen über die Reflexionsoptik(5) jeweils auf einen Teilbereich der Mantelfläche(1) des Objekts(2) geleitet sind, wobei die Sehstrahlen in bevorzugter Weise gleichmäßig um die Haupterstreckungsachse des Objektes(2) verteilt sind.

9. Vorrichtung nach einem der Ansprüche 1 bis 8, **dadurch gekennzeichnet, dass** eine Auswertungseinrichtung(19) zur Auswertung der in den Erfassungsbereich(6) der Bilderfassungseinrichtung(3) geleiteten Abbilder des Objekts(2) vorgesehen ist, wobei die Abbilder in bevorzugter Weise als digitales Signal der Bilderfassungseinrichtung(3) an die Auswertungseinrichtung(19) geleitet sind und wobei das digitale Signal durch Auswertungsalgorithmen wie beispielsweise Schrifterkennung, Fehlererkennung, Symbolerkennung und/oder Mustererkennung auswertbar ist.

10. Vorrichtung nach einem der Ansprüche 1 bis 9, **dadurch gekennzeichnet, dass** die mittlere Länge der Strahlengänge(4) im Wesentlichen gleich der Objektweite der Bilderfassungseinrichtung(3) ist.

11. Vorrichtung nach einem der Ansprüche 1 bis 10, **dadurch gekennzeichnet, dass** die Reflexionsoptik(5) als Abbilder der Mantelfläche(1) des Objektes(2) kontinuierlich und in mehreren Strahlengängen(4) in den Aufnahmebereich(6) der Bilderfassungseinrichtung(3) leitende Spiegeloptik und/oder Prismenoptik ausgeführt ist.

12. Vorrichtung nach einem der Ansprüche 1 bis 11, **dadurch gekennzeichnet, dass** im Erfassungsbereich der Bilderfassungseinrichtung eine erster Strahlteiler(12) und ein zweiter Strahlteiler(13) vorgesehen sind, wobei der zweite Strahlteiler(13) weiter von der Bilderfassungseinrichtung entfernt ist als der erste Strahlteiler(12) und wobei der zweite Strahlteiler(13) breiter ist als der erste Strahlteiler(12) und diesen somit seitlich überragt.

13. Vorrichtung nach einem der Ansprüche 1 bis 12, **dadurch gekennzeichnet, dass** zumindest eine Lichtquelle zur Beleuchtung der Mantelfläche(1) des Objektes(2) vorgesehen ist, wobei die Lichtquelle steuerbar ist und wobei die Beleuchtungsdauer der Lichtquelle, die Intensität der Lichtquelle und/oder die Blitzfrequenz der Lichtquelle variiert und/oder synchronisiert ist.

14. Vorrichtung nach Anspruch 13, **dadurch gekennzeichnet, dass die** Beleuchtungsdauer der Lichtquelle, die Intensität der Lichtquelle, die Blitzfrequenz der Lichtquelle und/oder die Relativgeschwindigkeit des Objektes(2) zur Bilderfassungseinrichtung(3) miteinander synchronisiert sind.

15. Vorrichtung nach einem der Ansprüche 13 oder 14 **dadurch gekennzeichnet, dass** die Lichtquelle als Dauerleuchtkörper oder als Blitzlicht-erzeugender Leuchtkörper wie beispielsweise LED-Blitz ausgeführt ist.
